# EUROPEAN PATENT SPECIFICATION

(11) **EP 2 375 597 B1**
(45) Date of publication and mention of the grant of the patent: **06.05.2015**
(21) Application number: 11160930.1
(22) Date of filing: 04.04.2011
(51) Int. Cl.: H04B 15/04, G09G 3/20

(54) **Display driver clock variation by software control**
Anzeigeansteuerungstaktänderung mittels Softwaresteuerung
Variation de l'horloge de commande d'affichage par commande logicielle

(30) Priority: 06.04.2010 TR 201002659
(43) Date of publication of application: 12.10.2011
(73) Proprietor: Vestel Elektronik Sanayi ve Ticaret A.S., 45030 Manisa (TR)
(72) Inventor: Okan, Bulent, 45030 Manisa (TR); Kos, Kerem, 45030 Manisa (TR)
(74) Representative: Cayli, Hülya

(56) References cited:
- US-A- 5 757 338
- US-A1- 2005 212 793
- US-B1- 7 606 546

## Description

### Technical Field

The present invention offers a system and a method for variation of a display clock using a software control.

### Prior Art

Electromagnetic Interference (EMI) caused by electronic devices is a great concern in electronics market. Devices, working especially on digital domain create considerable levels of EMI. Due to regulations regarding EMI, several systems and methods have been proposed to decrease EMI level of electronic devices. For marketing, the solution for EMI should be cost-effective and easily applicable. Several methods based on spread spectrum integrated circuits and/or serial resistors, ferrite beads or coils, are proposed for EMI level reduction. However, these solutions need extra cost and additional layout implementation. Also, the serial components may affect image display because of possible deviations in their value. There are also some limitations to implement Electromagnetic Compatibility (EMC) components and most of the cases when EMC components are used, EMI reduction is not enough to conform to the EMI regulations. Physical layout of these components inside a display cabinet is also another disadvantage.

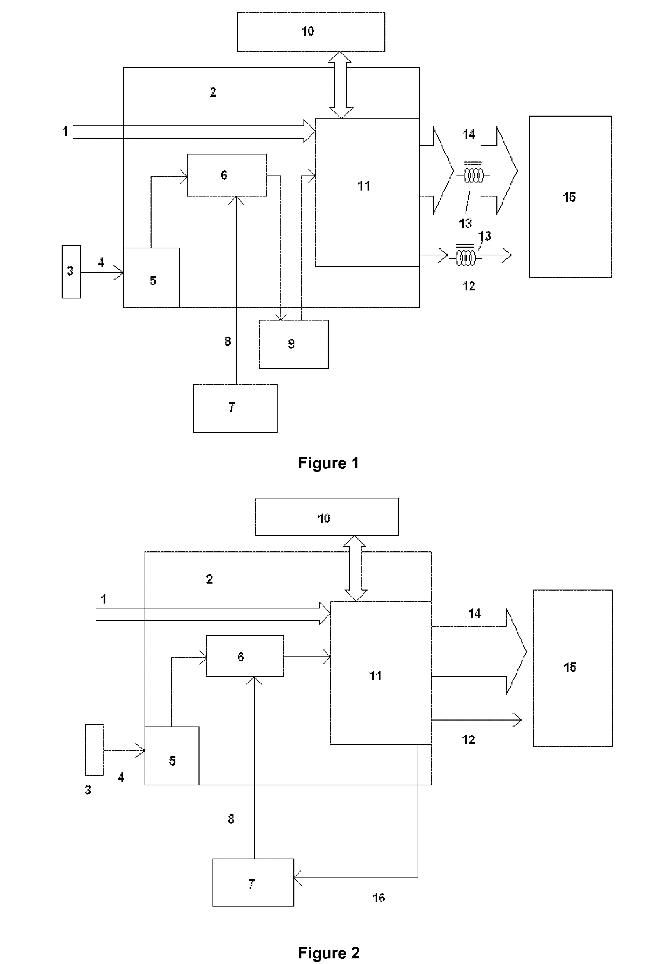

A system using conventional EMI reduction methods is given in Figure 1. A spread spectrum clock device (9) is implemented between clock multiplier/divider block (6) and output data processor (11), which varies data processor clock within a predefined sequence. The output of the output data processor (11) is connected to digital display (15) with additional EMI reduction components (13) in between. Said conventional system is applicable but not adequate since EMI level can not be reduced within the limits of the regulations. Moreover, additional components are used to reduce EMI level of the device which will create design and physical layout problems.

Related to stated problem a solution is provided in the patent document US 2003 169838. Said prior art document proposes a method using an adjustable delay generator to adjust the phase of the clock signal periodically to spread the energy hence decrease EMI. The described method is useful for EMI reduction however, alteration of phase of clock signal may cause momentary frequency jump and cause some devices to lock out because of very high or very low operation frequency. The invention described in the prior art document US 2003 169838 also requires implementation of a delay unit on the system.

Another solution related to reduction of EMI is proposed in the prior art document US 2004 217822. The proposal is to implement a frequency modulator and modulate frequency with a random signal to vary the frequency. The method is successful in terms of spreading the electromagnetic energy. However, a random frequency modulation is dangerous as it may cause lock out due to over or under clock frequency stemming from unrestricted frequency deviation. Extra components are required to implement the invention which means additional cost.

The patent document no US2005212793A1 discloses a method for reducing interference patterns in the display of an image on a screen with a pixel frequency, wherein the image can be described by pixel data, which are provided to the screen by a control unit based on received image data, wherein the control unit has an input for receiving the image data and a plurality of clock signals, wherein one or more of the clock signals couples into the control unit via the input and overlays the image data. In said method, during the generation of pixel data, varying one or several of the clock signals used in generating the pixel data by time-dependent frequency modulation, wherein the time-dependent frequency modulation is time-discrete over a row or a frame of the pixel data, and the frequency is changed in a change of rows or a change of frames. The control unit of said document controls a screen operating at a pixel frequency, for the display of an image on the screen with reduced interference pattern, wherein the control unit has a plurality of clock signals, having an input for receiving image data, wherein one or more of the clock signals couples into the control unit via the input and is overlaid with the image data; a processor, which processes the received image data for generating the pixel data, wherein the processor varies one or several of the clock signals used in generating the pixel data during the generation of the pixel data by time-dependent frequency modulation; and an output for providing the pixel data for the display, wherein the time-dependent frequency modulation is time-discrete over a row or a frame of the pixel data, and wherein the processor causes a change of the frequency in a change of rows or a change of frames.

Another patent document no US5757338A discloses an EMI reduction method for a flat-panel display controller using horizontal-line based spread spectrum. In the said method, to modulate the clocks to the CRT and LCD, emissions of both interfaces are reduced. The frequency sweep of the modulated clock is reset at the end of every horizontal line. Thus all lines are displayed for the same period, although transferring of pixels within a line are modulated. Even though the pixel clock is modulated while pixels are written to the displays, the same sequence of modulations is repeated for each line.

The patent document no US7606546B1 discloses a system and a method for using a variable clock generator to synchronize or make equal data rates between a fixed clock domain and a variable clock domain while reducing EMI. In said method, synchronizing data rates across clock domains minimizes storage used to transition data signals between clock domains, one of those data rates being an average data rate (or "rate-averaged data rate") over an interval of time. The variable frequency clock generator comprises a phase modulator configured to shift a fixed clock frequency signal to form a variable frequency clock signal for reducing EMI, whereby the variable frequency clock signal is used to establish a rate-averaged data rate for setting data rates equal or about equal over multiple clock domains. The variable frequency clock synchronizes data rates across clock domains to minimize and/or negate average data rates of the variable clock domain from drifting from the fixed data rate of the fixed clock domain.

### Brief Description of the Invention

Present invention offers a software controlled clock variation method in display devices, in order to decrease electromagnetic interference (EMI) level of the device. The invention uses a software routine to change display driver clock frequency periodically such that the clock frequency is varied within a predefined range. The software runs on a microcontroller and controls clock multiplier/divider circuit.

The method is applicable without using additional components in the system and effective hence it provides cost saving and ease of design. The invention can be used for TFT LCD TV sets instead of external EMI reduction solutions. The solution may also be applicable for electronic equipment which has Phase Locked Loop (PLL) and frequency adjustment capability.

### Object of the Invention

The object of the present invention is to provide a method for clock variation in display devices.

Another object of the present invention is to reduce EMI of a display device.

Another object of the present invention is to obtain a solution to the EMI problem without extra implementations to the system.

Another object of the present invention is to oscillate clock frequency within a predefined range in small steps in order to achieve a controlled variation.

### Brief Description of the Drawings

**Figure 1****;** shows block diagram of conventional solution for EMI reduction.
**Figure 2****;** shows block diagram of present invention.

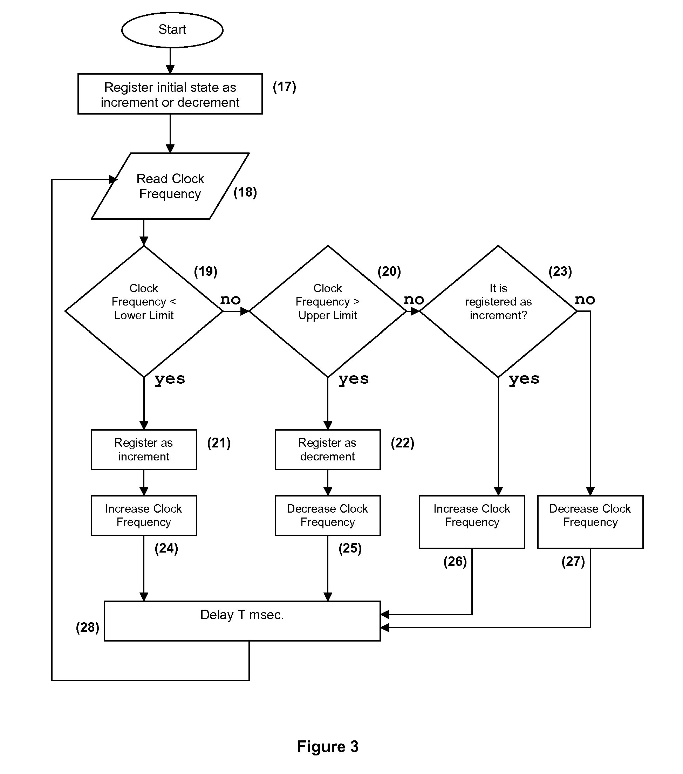

**Figure 3****;** shows flow diagram of present invention.

The reference numbers as used in figures may possess the following meanings.

| | |
|---|---|
| Digital video input and clock input | (1) |
| Scaler Circuit | (2) |
| Crystal (XTAL) | (3) |
| Main Oscillator Clock Signal | (4) |
| Phase Locked Loop (PLL) Circuit | (5) |
| Clock Multiplier/Divider Circuit | (6) |
| Microcontroller | (7) |
| Communication port for software register settings | (8) |
| Spread Spectrum Clock Device | (9) |
| Memory | (10) |
| Output Data Processor | (11) |
| Clock Output | (12) |
| Additional Components for EMI reduction | (13) |
| Display Data Output | (14) |
| Digital Display | (15) |
| Output Data Feedback | (16) |
| Clock Read Out | (18) |
| Lower limit check | (19) |
| Higher limit check | (20) |
| Registration as increment | (21) |
| Registration as decrement | (22) |
| Registration check | (23) |
| Increase clock frequency | (24, 26) |
| Decrease clock frequency | (25, 27) |
| Time delay | (28) |

### Detailed Description of the Invention

The digital display device controllers and display driver integrated circuits generally have a function to provide a display clock output and a data output. Most of the display units have to be driven by clock frequencies different than controller frequency since display unit and controller generally run at different operating frequencies. As a result of digital communication in between digital display device controller and digital display, electromagnetic interference (EMI) problems occur. Display driver clock variation method by software control eliminates EMI problem by changing clock frequency and PLL (Phase Locked Loop) settings of display driver continuously by a software routine. The software routine may work on background, may be called periodically or by an interrupt. The software routine updates clock frequency such that clock frequency is varied in a predefined range. Hence repetition of EMI in the same frequency is eliminated. Final EMI measurements taken on quasi peak measurement method shows significant reduction of EMI while the method is being used.

The invention is defined by the features of the independent claims. Further embodiments are defined in the dependent claims.

The block diagram of the system is shown in Figure 2. The scaler circuit (2) is used for driving digital display (15) with a different clock than video input (1) clock and for processing video input (1) data to be sent with the digital display (15) clock and uses a memory (10) to temporarily store digital video data to be sent to the display. The scaler circuit (2) inputs main oscillator clock signal (4) from crystal (XTAL) (3) to PLL circuit (5). PLL circuit (5) supplies common operating frequency for the scaler circuit (2). The output of the PLL circuit (5) is connected to a clock multiplier/divider circuit (6). Clock divider/multiplier circuit (6) has a function to set clock frequency for output clock and output data processor (11) by software control. A microcontroller (7), which may be already available on the system for various purposes, runs the software for adjusting the clock frequency and the setting operation is done via communication port (8) for software register settings. An output data feedback (16) can also be used to detect timing intervals for preventing side effects.

When the system starts clock variation method for the first time, an initial variation state is registered as either increment or decrement (17).Then, current clock frequency value is read (18) and a check procedure starts. The current clock frequency value is checked whether it is below the lower limit of a predefined range or not (19) so as to prevent under-clock problems. If the current clock frequency value is below the lower limit of the predefined range, variation state is registered as increment (21). Then the clock frequency value is increased by a predefined step value and clock frequency registers are updated accordingly (24).

If the current clock frequency value is not below the lower limit of the predefined range, current clock frequency value is checked whether it is above the higher limit of the predefined range (20). A too high clock frequency value may affect component operations and cause them to lock out. If the clock frequency is above the higher limit, the variation state is registered as decrement (22) and clock frequency value is decreased by a predefined step value (25) and clock frequency registers are updated accordingly.

If the current clock frequency is also not above the higher limit of the predefined range, the previous variation state is safe to be used. The variation state is checked whether it is set as increment or decrement (23). If registered variation state is increment, the clock frequency is increased by a predefined step value (26) and clock frequency is updated. If the registered state is not increment, the clock frequency is decreased by the predefined step value (27) and clock frequency value is updated.

Use of a predefined range and predefined variation step enables the system to operate safely since frequency deviation does not disturb component operations. Any jump in frequency is eliminated in this manner.
A predefined delay is provided (28) to obtain the duration of the frequency change interval at the end of each variation operation so that settling of the system conforming to updated clock frequency is guaranteed. Said frequency change interval can be defined by manufacturer according to components of the display device.

The method may be triggered due to several conditions of the device. A pre-delay may be employed, that is, the clock variation method is first triggered after a pre-defined time following power on of the device. The pre-delay is advantageous as the EMI level gradually decreases within time and an immediate reduction is unnecessary in this case. Moreover, power-on procedure may require a definite initial clock frequency for safe operation and immediate variation of clock frequency may affect said power-on procedure, causing some devices to lock-out.

Another triggering condition for clock variation may be operating temperature of some components of the device, as increasing temperature causes an increase in the EMI level. A repeated measurement from readily available temperature sensors or sensors implemented to trigger the clock variation may be taken as reference for triggering clock variation method. Conditional triggering due to temperature provides an adaptive system, preventing unnecessary triggering of the clock variation.

The operation may be re-triggered repeatedly by the device depending on preset conditions. The software routine which is responsible for clock variation may loop starting from reading current clock frequency value. Continuous re-triggering with a single run of the software routine has both advantage and disadvantage. It is advantageous in terms of the capability of running independently since employment of any other component is not necessary. However, a continuous running software routine uses up microcontroller resources and may be undesirable for systems with minimal processing capabilities.

To eliminate the disadvantage of a looping software routine, the routine may be triggered externally. A single run or a definite number of looping for each triggering may be preferred. Different sources such as a timer readily available on the device, being either an internal timer of the microcontroller or an external device implemented for any purpose may be employed for triggering operation. An interrupt routine may further be used for triggering operation. The interrupt source may be internal, being a module inside the microcontroller, or external, that is connected to an interrupt pin of the microcontroller. A wide range of circuitry may be employed or implemented as an interrupt source.

As a result, the EMI energy is spread conforming to the regulations, with a controlled, non-disturbing system that is implementable without extra component and additional cost.

## Claims

1. An electromagnetic interference reduction method for a digital display device by means of a display driver clock deviation by software control, **characterized in that** it comprises steps of;
- setting a clock frequency value to a predefined clock frequency value which is between a lower limit value and a higher limit value
- changing said clock frequency value to new clock frequency values between said predefined lower or higher limit values by increasing or decreasing said clock frequency value by a predefined step value within every predefined frequency change interval
- repeating preceding steps for each call of software routine, periodically; wherein said software routine is called after a predefined time following power on said digital display device and when a measured temperature is equal to or above a pre-defined temperature limit.

2. A method according to claim 1 wherein there is a predefined delay after each said change of said clock frequency.

3. An electromagnetic interference reduction system for a digital display device, which comprise an output data processor (11), by means of a display driver clock deviation by software control **characterized in that** it comprises;
- A scaler circuit (2) to drive a digital display with a different clock than a digital video clock,
- A crystal (3) that supplies main oscillator clock signal (4) to said scaler circuit (2),
- A memory (10) that temporarily stores digital video data,
- A digital display driven by said scaler circuit,
- A microcontroller (7) that runs a software routine which changes a clock frequency value via said scaler circuit (2) and sets said clock frequency value via a communication port for software settings (8) after a predefined time following power on said digital display device and when a measured temperature is equal to or above a pre-defined temperature limit.

4. A system according to claim 3 wherein an output data feedback (16) is used between said output data processor (11) and said microcontroller (7).

## Patentansprüche

1. **Verfahren** zur Reduzierung der elektromagnetischen Interferenz für ein oder in einem digitalen Anzeigegerät (einer Digitalanzeige) über eine Taktabweichung für den Anzeigetreiber per Software-Steuerung, **dadurch gekennzeichnet, dass** die folgenden Schritte vorgesehen sind
- Setzen oder Vorgeben einer Taktfrequenz mit einem vorbestimmten Taktfrequenz-Wert, der zwischen einem unteren Grenzwert und einem oberen oder höheren Grenzwert liegt;
- Ändern der Taktfrequenz auf eine neue Taktfrequenz oder neue Taktfrequenzen zwischen dem vorbestimmten oder gegebenen unteren oder oberen Grenzwert durch Anheben oder Absenken der Taktfrequenz mit einem gegebenen oder vorgegebenen Schritt oder Stufe innerhalb jedes vorbestimmten Frequenz-Änderungsintervalls;
- Wiederholen der vorhergehenden Schritte für jeden Aufruf der Software-Routine, periodisch; wobei die Software-Routine aufgerufen wird, nachdem eine vorbestimmte Zeit nach dem Einschalten der Digitalanzeige oder des Digital-Anzeigegeräts verstrichen ist und wenn eine gemessene Temperatur gleich oder oberhalb eines vorgegebenen Temperaturlimits liegt.

2. Verfahren nach Anspruch 1, wobei eine vorbestimmte Verzögerung nach jeder Änderung der Taktfrequenz vorgesehen wird.

3. System zur Reduzierung einer elektromagnetischen Interferenz in einem oder für ein digitales Anzeigegerät oder ein Gerät mit Digitalanzeige, welches einen Ausgangs-Datenprozessor (11) aufweist, dies über oder mittels einer Taktabweichung oder Taktveränderung des Anzeigetreibers und per Softwaresteuerung, **dadurch gekennzeichnet, dass** das System aufweist
- eine Skalierungsschaltung (2) zum Ansteuern der Digitalanzeige mit einem anderen Takt als einem digitalen Videotakt;
- ein Kristall oder Quarz (3), der das Haupt-Oszillator-Taktsignal (4) zu der Skalierschaltung (2) speist oder führt;
- einen Speicher (10), der das digitale Videosignal temporär speichert oder zwischenspeichert;
- eine digitale Anzeige oder Digitalanzeige, welche von der Skalierschaltung angesteuert oder bedient wird;
- ein Mikrorechner (7), auf dem eine Software-Routine abläuft oder der in der Lage ist, ablaufen zu lassen, welche die Taktfrequenz über die Skalierschaltung (2) verändert und die Taktfrequenz über einen Verbindungsport für Software-Einstellungen (8) einstellt, nach einer vorgegebenen Zeit nach dem Einschalten des Digitalanzeige-Geräts und wem eine gemessene Temperatur gleich oder grösser ist als seine vorgegebene Grenztemperatur.

4. System nach Anspruch 3, wobei eine Ausgangs-Datenrückkopplung (16) zwischen dem Ausgangs-Datenprozessor (11) und dem Mikrorechner (7) verwendet wird oder verwendbar ist.

## Revendications

1. Procédé de réduction d'interférence électromagnétique pour un dispositif d'affichage numérique au moyen d'une déviation d'horloge de pilote d'affichage par commande logicielle, **caractérisé en ce qu'**il comprend les étapes consistant à :
- régler une valeur de fréquence d'horloge à une valeur de fréquence d'horloge prédéfinie qui se situe entre une valeur limite inférieure et une valeur limite supérieure
- changer ladite valeur de fréquence d'horloge pour de nouvelles valeurs de fréquence d'horloge entre lesdites valeurs limites inférieure ou supérieure prédéfinies en augmentant ou en diminuant ladite valeur de fréquence d'horloge d'une valeur de pas prédéfinie à l'intérieur de chaque intervalle de changement de fréquence prédéfini
- répéter les étapes précédentes pour chaque appel de routine logicielle, périodiquement ;
dans lequel ladite routine logicielle est appelée après un temps prédéfini suite à la mise sous tension dudit dispositif d'affichage numérique et lorsqu'une température mesurée est égale à ou au-dessus d'une limite de température pré-définie.

2. Procédé selon la revendication 1, dans lequel il y a un délai prédéfini après chaque dit changement de ladite fréquence d'horloge.

3. Système de réduction d'interférence électromagnétique pour un dispositif d'affichage numérique, qui comprend un processeur de données de sortie (11), au moyen d'une déviation d'horloge de pilote d'affichage par commande logicielle, **caractérisé en ce qu'**il comprend :
- un circuit de mise à l'échelle (2) pour piloter un affichage numérique avec une horloge différente d'une horloge vidéo numérique,
- un quartz (3) qui fournit un signal d'horloge d'oscillateur principal (4) audit circuit de mise à l'échelle (2),
- une mémoire (10) qui stocke temporairement des données vidéo numériques,
- un affichage numérique piloté par ledit circuit de mise à l'échelle,
- un microcontrôleur (7) qui exécute une routine logicielle qui change une valeur de fréquence d'horloge via ledit circuit de mise à l'échelle (2) et règle ladite valeur de fréquence d'horloge via un port de communication pour des réglages logiciels (8) après un temps prédéfini suite à la mise sous tension dudit dispositif d'affichage numérique et lorsqu'une température mesurée est égale à ou au-dessus d'une limite de température pré-définie.

4. Système selon la revendication 3, dans lequel une rétroaction de données de sortie (16) est utilisée entre ledit processeur de données de sortie (11) et ledit microcontrôleur (7).
